# EUROPÄISCHE PATENTSCHRIFT

(11) **EP 0 939 987 B1**
(45) Veröffentlichungstag und Bekanntmachung des Hinweises auf die Patenterteilung: **27.02.2002**
(21) Anmeldenummer: 97951138.3
(22) Anmeldetag: 06.11.1997
(51) Int. Cl.: H02B 1/30, H02B 1/32, H02B 1/01

(54) **RAHMENPROFIL FÜR EIN RAHMENGESTELL EINES SCHALTSCHRANKES**
FRAME SECTION FOR A SWITCHING CABINET RACK
PROFILE DE CHASSIS POUR BAIE D'ARMOIRE DE DISTRIBUTION

(30) Priorität: 19.11.1996 DE 19647754
(43) Veröffentlichungstag der Anmeldung: 08.09.1999
(73) Patentinhaber: Rittal-Werk Rudolf Loh GmbH & Co. KG, 35745 Herborn (DE)
(72) Erfinder: BENNER, Rolf, D-35745 Herborn-Amdorf (DE); KÖHLER, Martina, D-35745 Herborn (DE); MÜNCH, Udo, D-35764 Sinn (DE); REUTER, Wolfgang, D-57299 Burbach 5 (DE)
(74) Vertreter: Fleck, Hermann-Josef, Dr.-Ing.
(86) Internationale Anmeldenummer: EP9706149
(87) Internationale Veröffentlichungsnummer: WO9823008

(56) Entgegenhaltungen:
- DE-A- 2 043 699
- DE-A- 4 140 072
- DE-A- 4 244 143
- DE-A- 4 336 285
- DE-C- 3 344 598
- DE-U- 29 601 867

## Beschreibung

Die Erfindung betrifft ein Rahmenprofil für ein Rahmengestell eines Schaltschrankes mit zwei rechtwinklig zueinanderstehenden, dem Innenraum des Schaltschrankes zugewandten Innenwänden, die mit wenigstens einer Reihe von in gleicher Teilung eingebrachten Befestigungsaufnahmen versehen sind, wobei die Befestigungsaufnahmen als schlitzförmige Durchbrüche ausgebildet sind, deren lichte Öffnungsweite in Längs-richtung des Rahmenprofils größer ist als die lichte Öffnungsweite quer zur Längsrichtung.

Ein derartiges Rahmengestell ist aus der DE 42 44 143 A1 bekannt. In diesem Dokument ist ein Rahmengestell für einen Schaltschrank beschrieben. Das Rahmengestell ist aus zwölf querschnittsgleichen Rahmenprofilen zusammengesetzt. Die Rahmenprofile weisen zwei rechtwinklig zueinderstehende Innenwände auf, die unter Bildung einer vertikalen Innenkante dem Schaltschrank-Innenraum zugewandt sind. In die beiden Innenwände sind jeweils zwei Reihen von Befestigungsaufnahmen eingebracht. Die Befestigungsaufnahmen können dabei als schlitzförmige Durchbrüche ausgebildet sein, deren lichte Öffnungsweite in Längsrichtung des Rahmenprofiles größer ist als die lichte Öffnungsweite quer zur Längsrichtung. Infolge der länglichen Ausbildung der Befestigungsaufnahmen wird die Steifigkeit des Rahmenprofiles nur gering beeinflusst. Die Möglichkeiten zur Anbringung von Einbauten im Innenraum des Schaltschrankes sind bei solchen Rahmenprofilen aber begrenzt.

Ein weiteres Rahmengestell ist in der DE 33 44 598 beschrieben. Das Rahmengestell weist 12 gleiche miteinander verbundene Rahmenprofile auf. Die Rahmenprofile tragen zwei Innenwände, die rechtwinklig aneinandergebunden sind. In diese Innenwände ist je eine Reihe von Befestigungsaufnahmen eingebracht. Die Befestigungsaufnahmen werden von Durchbrüchen mit im wesentlichen quadratischen Querschnitt gebildet.

Es ist Aufgabe der Erfindung, ein Rahmenprofil der eingangs erwähnten Art zu schaffen, bei dem die Beeinträchtigung der Steifigkeit durch die Befestigungs-aufnahmen gering ist und bei dem an den Befestigungsaufnahmen eine stabile Anbringung von Einbauten möglich ist.

Es ist Aufgabe der Erfindung, ein Rahmenprofil der in den Oberbegriffen der Patentansprüche 1 und 4 erwähnten Art zu schaffen, mit dem sich eine Vielzahl von Befestigungsmöglichkeiten verwirklichen lassen.

Diese Aufgabe wird mit den Merkmalen der Patentansprüche 1 und 4 gelöst. Demgemäß ist es also vorgesehen, dass an die Innenwände (der vertikalen Rahmenprofile) jeweils rechtswinklig eine weitere als Innenwand ausgebildete Profilseite angeschlossen ist, und dass die Innenwände und die Profilseiten mit Reihen von Befestigungsaufnahmen versehen sind. Damit bieten diese Rahmenprofile zwei Befestigungsansätze, die jeweils aus einer Innenwand und einer Profilseite gebildet sind. Jeder Befestigungsansatz ist dabei einer Schaltschrankseite zugeordnet. Infolge der verwendeten schlitzförmigen Durchbrüche lassen sich die Befestigungsansätze entsprechend mit kleinem Querschnitt dimensionieren. Dadurch ergibt sich auch für das gesamte Rahmenprofil bei gleichzeitig hoher Steifigkeit eine relativ geringe Querschnittsfläche. An den beiden Innenwänden und zusätzlich den beiden Profilseiten können vielfältige Befestigungsmöglichkeiten verwirklicht werden. Insbesondere ist es beispielsweise möglich, doppelte Befestigungsebenen auszubilden. Diese werden dann mit der Innenwand des einen Befestigungsabschnittes und der Profilseite des zweiten Befestigungsabschnittes festgelegt. Die beiden Befestigungsebenen sind dann parallel zu der zugeordneten Schaltschrankseite ausgerichtet.

Bei der Dimensionierung der Befestigungsaufnahmen soll die lichte Öffnungsweite der Befestigungsaufnahmen in Längsrichtung des Rahmenprofiles mindestens doppelt so groß sein wie die Öffnungsweite quer zur Längsrichtung. In den Befestigungsaufnahmen können verschiedenste Befestigungselemente festgelegt sein. Vorteilhaft ist die Verwendung von hakenförmigen Befestigungselementen. Beispielsweise können Montageschienen als Einbauten verwendet sein. Diese sind aus Blech gebogen. Das hakenförmige Befestigungselement ist dabei aus dem Blech ausgestanzt. Die lichte Öffnungsweite quer zur Längsrichtung des Rahmenprofiles ist dann an die Dicke des Bleches angepasst.

Es lässt sich also mit den schlitzförmigen Befestigungsaufnahmen ein einfacher und kostengünstiger Verbindungsmechanismus bereitstellen.

Eine bevorzugte Erfindungsvariante sieht vor, dass die dem Innenraum des Schaltschrankes zugewandten Innenwände des Rahmenprofiles mit einer Reihe von Befestigungsaufnahmen versehen sind. Bei diesem Rahmenprofil ist eine Vielzahl von Befestigungsmöglichkeiten bereitgestellt, die je nach Platzangebot im Innenraum des Schaltschrankes genutzt werden können. Insbesondere ist erreicht, dass stets eine Profilseite parallel zu einer Innenwand steht. Damit ergeben sich zwei parallel zueinander verlaufende Befestigungsebenen. Die Anzahl der Anbringungsmöglichkeiten für Einbauten kann einfach auch dadurch erhöht werden, dass die dem Innenraum des Schaltschrankes zugekehrte Innenwand mit jeweils mindestens einer weiteren Reihe von Befestigungsaufnahmen versehen ist, und dass die Reihen von Befestigungsaufnahmen zueinander parallel verlaufen. Bei einem aus den erfindungsgemäßen Rahmenschenkeln zusammengesetzten Rahmengestell ist es denkbar, dass die horizontalen Rahmenprofile, die einen Boden- und einen Deckrahmen bilden auf der vertikal zur Seite des RahmengesteHes verlaufenden Innenwand mit zwei Reihen von Befestigungsaufnahmen versehen sind, wobei zumindest die der Seite des Rahmengestelles zugekehrte Reihe von Befestigungsaufnahmen die schlitzförmigen Durchbrüche bildet und daß diese Reihen von Befestigungsaufnahmen in die Reihen von Befestigungsaufnahmen der vertikalen Rahmenprofile übergehen. Dadurch, daß die Reihen von Befestigungsaufnahmen der horizontalen Rahmenprofile in die der vertikalen Rahmenprofile übergehen, können Einbauten über Eck befestigt werden. Insbesondere ist es so von Vorteil, wenn die Befestigungsaufnahmen im Rastermaß ineinander übergehen.

Die Erfindung wird im folgenden anhand eines in den Zeichnungen dargestellten Ausführungsbeispieles näher erläutert. Es zeigen:
- Fig. 1: in perspektivischer Seitendarstellung ein Rahmengestell für einen Schaltschrank bestehend aus Rahmenprofilen und
- Fig. 2: eine Detaildarstellung eines Eckbereiches des Rahmengestelles gemäß Fig. 1.

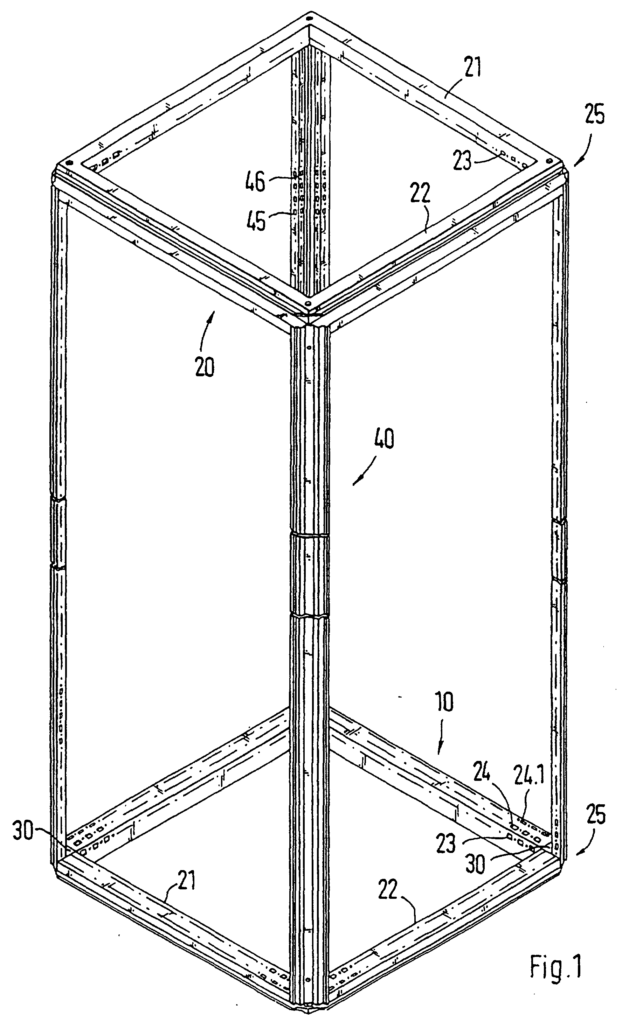

In Fig. 1 ist ein Rahmengestell für einen Schaltschrank gezeigt. Das Rahmengestell ist im wesentlichen aus einem Bodenrahmen 10 und einem Deckrahmen 20 und vier vertikalen Rahmenprofilen 40 zusammengesetzt. Die vertikalen Rahmenprofile 40 verbinden den Bodenrahmen 10 mit dem Deckrahmen 20. Boden- und Deckrahmen 10 und 20 sind identisch aufgebaut, so daß sie gegeneinander vertauscht werden können.

Der Boden- und der Deckrahmen 10 und 20 weisen jeweils vier rechtwinklig zueinander angeordnete horizontale Rahmenprofile 21, 22 auf. Die horizontalen Rahmenprofile 21, 22 sind an ihren, dem Innenraum des Rahmengestells zugekehrten Innenwänden mit Reihen von Befestigungsaufnahmen 23, 24, 24.1 versehen. Auch die vertikalen Rahmenprofile 40 sind mit zum Innenraum des Rahmengestelles gekehrten Befestigungsaufnahmen 45, 46 versehen. Zwischen den einzelnen Befestigungsaufnahmen 23, 24, 24.1, 45, 46 sind Gewindeaufnahmen 24.2 bzw. 44 angeordnet.

Die vertikalen Rahmenprofile 40 sind über Verbinder 30 mit dem Boden- bzw. Deckrahmen 10, 20 verbunden. Die Verbinder 30 sind im Bereich von Eckaufnahmen 25 des Boden- bzw. Deckrahmens 10, 20 angeordnet. Zur Befestigung der vertikalen Rahmenprofile 40 an dem Verbinder 30 sind beispielsweise Verschraubungen oder eine Verschweißung vorgesehen.

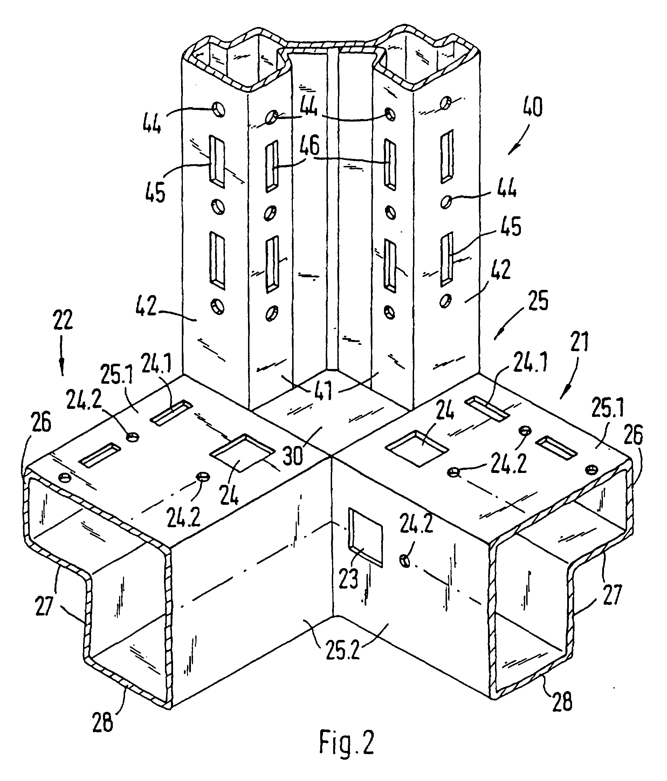

In Fig. 2 ist ein Eckbereich des Rahmengestelles gemäß Fig. 1 näher gezeigt.

Diese Darstellung läßt erkennen, daß die beiden horizontalen Rahmenprofile 21, 22 gleich aufgebaut sind. Dem Innenraum des Rahmengestelles zugekehrt, sind die beiden Innenwände 25.1, 25.2 rechtwinklig aneinander angeschlossen. Die horizontale, nach oben gekehrte Innenwand 25.1 geht in eine Abkantung 26 über. Die Abkantung 26 steht parallel zur Seite des Rahmengestelles. An ihr lassen sich Seitenwände oder eine Schranktür unter Zwischenschaltung einer Dichtung anlegen. Die Abkantung 26 geht in zwei Außenwände 27 über, die zueinander wiederum rechtwinklig stehen. Damit sind die Außenwände 27 parallel zu den Innenwänden 25.1, 25.2 angeordnet. In dem durch den Rücksprung der beiden Außenwände 27 gebildeten Bereich kann eine Abkantung der Seitenwand bzw. der Schranktür aufgenommen werden. Die vertikale Außenwand 27 ist mit der vertikalen Innenwand 25.2 über den Boden 28 verbunden, so daß sich für die horizontalen Rahmenprofile 21, 22 ein geschlossenes Hohlprofil ergibt.

Die vertikale Innenwand ist mit einer Reihe von Befestigungsaufnahmen 23 versehen. Die Befestigungsaufnahmen 23 sind als Durchbrüche mit im wesentlichen rechteckigen Querschnitt ausgebildet. An der nach oben gekehrten horizontalen Innenwand sind zwei Reihen von Befestigungs-aufnahmen 24, 24.1 vorgesehen. Die beiden Reihen von Befestigungsaufnahmen verlaufen zueinander parallel in Längsrichtung des Rahmenprofiles 21, 22. Während die innenliegenden Befestigungsaufnahmen 24 zu den Befestigungsaufnahmen 23 der vertikalen Innenwand 25.2 identisch sind, sind die Befestigungsaufnahmen 24.1 schlitzförmig ausgebildet. Diese schlitzförmigen Befestigungsaufnahmen 24.1 haben eine lichte Öffnungsweite in Längsrichtung des Rahmenprofiles 21, 22, die größer ist als die Öffnungsweite quer zur Längsrichtung. Zwischen den einzelnen Befestigungsaufnahmen 23, 24, 24.1 sind jeweils Gewindeaufnahmen 24.2 angeordnet. Die Gewindeaufnahmen 24.2 sind in ihrer Rohform Ausstanzungen, in die selbstschneidende Schrauben eingedreht werden können.

Die horizontalen Rahmenprofile 21, 22 sind rechtwinklig aneinander gebunden und bilden die nach außen offene Eckaufnahme 25. In dieser Eckaufnahme 25 ist an dem Verbinder 30 das vertikale Rahmenprofil 40 angelegt.

Das vertikale Rahmenprofil 40 hat vier Innenwände 41, 42. Die Innenwände 41 stehen zueinander rechtwinklig und bilden eine dem Innenraum des Rahmengestelles zugekehrte Innenaufnahme. In dieser Innenaufnahme können vertikal verlaufende Montageschienen befestigt werden. An die beiden Innenwände 41 schließen sich die beiden als Profilseiten ausgebildete Innenwände 42 rechtwinklig an. Diese Innenwände 42 stehen auch rechtwinklig zu den Seiten des Rahmengestelles. Jede der Innenwände 41, 42 ist mit einer Reihe von Befestigungsaufnahmen 45, 46 versehen. Diese Befestigungsaufnahmen 45, 46 sind ebenso wie die Befestigungsaufnahmen 24.1 der horizontalen Rahmenprofile 21, 22 schlitzförmige ausgebildet, wobei die Haupterstreckungsrichtung in Längsrichtung des Rahmenprofiles 40 verläuft. Die Innenwände 42 schließen an der Außenseite des Rahmengestelles bündig mit den Innenwänden 25.1 der horizontalen Rahmenprofile 21, 22 ab. Da die Befestigungsaufnahmen 24.1 der horizontalen Rahmenprofile 21, 22 und die Befestigungsaufnahmen 45 der vertikalen Rahmenprofile von den Seiten des Rahmengestelles gleich weit beabstandet sind, gehen sie ineinander über. Es ergibt sich damit ein umlaufender Befestigungsrahmen. Ebenso können die Befestigungsaufnahmen 24 in die Befestigungsaufnahmen 46 der Innenwände 41 ineinander übergehen.

Wie den Zeichnungen leicht entnommen werden kann, ist mit den schmalen, schlitzförmigen Befestigungsaufnahmen 24.1, 45, 46 eine kleine Baugröße der einzelnen Rahmenprofile 21, 22, 40 verwirklichbar. Auch schwächen die Befestigungsaufnahmen 24.1, 45, 46 die Rahmenprofile 21, 22, 40 kaum, so daß diese eine hohe Steifigkeit aufweisen. Gleichzeitig lassen sich jedoch Einbauten stabil an den Befestigungsaufnahmen 24.1, 45, 46 befestigen. Durch die Vielzahl der Befestigungsmöglichkeiten ist eine große Flexibilität für die Anbringung der Einbauten im Innenraum des Schaltschrankes gegeben. Insbesondere können mit den vier Innenwänden 41, 42 der vertikalen Rahmenprofile 40 sowohl in Richtung des einen horizontalen Rahmenprofiles 21 als auch des anderen 22 zwei hintereinanderliegende vertikale Befestigungsebenen ausgebildet werden. Die Befestigungsebenen werden dabei jeweils von einer Innenwand 41 und einer weiteren Innenwand 42 gebildet.

## Patentansprüche

1. Rahmenprofil für ein Rahmengestell eines Schaltschrankes mit zwei rechtwinklig zueinanderstehenden, dem Innenraum des Schaltschrankes zugewandten Innenwänden, die mit wenigstens einer Reihe von in gleicher Teilung eingebrachten Befestigungsaufnahmen (24.1, 45, 46) versehen sind, wobei die Befestigungsaufnahmen (24.1, 45, 46) als schlitzförmige Durchbrüche ausgebildet sind, deren lichte Öffnungsweite in Längs-richtung des Rahmenprofils (21, 22, 40) größer ist als die lichte Öffnungsweite quer zur Längsrichtung,
**dadurch gekennzeichnet,**
**daß** an die Innenwände (41) jeweils rechtwinklig eine weitere als Innenwand ausgebildete Profilseite (42) angeschlossen ist, und
die Innenwände (41) und die Profilseiten (42) mit Reihen von Befestigungs-aufnahmen (24.1, 45, 46) versehen sind.

2. Rahmenprofil nach Anspruch 1,
**dadurch gekennzeichnet,**
**daß** die lichte Öffnungsweite der Befestigungsaufnahmen (24.1, 45, 46) in Längsrichtung des Rahmenprofils (21, 22, 40) mindestens doppelt so groß ist wie die Öffnungsweite quer zur Längsrichtung.

3. Rahmenprofil nach einem der Ansprüche 1 oder 2,
**dadurch gekennzeichnet,**
**daß** die dem Innenraum des Schaltschrankes zugekehrte Innenwand (25.1, 25.2) mit jeweils mindestens einer weiteren Reihe von Befestigungsaufnahmen (24) versehen ist, und
**daß** die Reihen von Befestigungsaufnahmen (24.1, 24) zueinander parallel verlaufen.

4. Rahmengestell für einen Schaltschrank mit vertikalen und horizontalen Rahmenprofilen (40, 21, 22), wobei die Rahmenprofile (40, 21, 22) zwei rechtwinklige zueinanderstehende, dem Innenraum des Rahmengestelles zugewandte Innenwände aufweisen, die mit wenigstens einer Reihe von in gleicher Teilung eingebrachten Befestigungsaufnahmen (21.4, 45, 46) versehen sind, wobei die Befestigungsaufnahmen (24.1, 45, 46) als schlitzförmige Durchbrüche ausgebildet sind, deren lichte Öffnungsweite in Längsrichtung der Rahmenprofile größer ist als die lichte Öffnungsweite quer zur Längsrichtung,
**dadurch gekennzeichnet,**
**daß** an die Innenwände (41) der vertikalen Rahmenprofile (40) jeweils rechtwinklig eine weitere als Innenwand ausgebildete Profilseite (42) angeschlossen ist, und
**daß** die Innenwände (41) und die Profilseiten (42) mit Reihen von Befestigungsaufnahmen (24.1, 45, 46) versehen sind.

5. Rahmengestell nach Anspruch 4,
**dadurch gekennzeichnet,**
**daß** die horizontalen Rahmenprofile (21, 22), die einen Boden- und einen Deckrahmen (10 und 20) bilden, auf der vertikal zur Seite des Rahmengestells verlaufenden Innenwand (25.1) mit zwei Reihen von Befestigungsaufnahmen (24, 24.1) versehen sind, wobei zumindest die der Seite des Rahmengestells zugekehrte Reihe von Befestigungsaufnahmen (24.1) die schlitzförmigen Durchbrüche bildet, und
**daß** diese Reihen von Befestigungsaufnahmen (24.1) in die Reihen von Befestigungsaufnahmen (45) der vertikalen Rahmenprofile (40) übergehen.

## Claims

1. Frame profile for a framework of a switch cabinet, having two inner walls which are located at right angles to one another, and directed towards the interior of the switch cabinet and are provided with at least one row of fastening mounts (24.1, 45, 46) introduced at equal spacing, the fastening mounts (24.1, 45, 46) being designed as slot-like through-passages of which the clear opening extent in the longitudinal direction of the frame profile (21, 22, 40) is greater than the clear opening extent transverse to the longitudinal direction, **characterized in that** connected at right angles in each case to the inner walls (41) is a further profile side (42) designed as an inner wall, and the inner walls (41) and the profile sides (42) are provided with rows of fastening mounts (24.1, 45, 46).

2. Frame profile according to Claim 1, **characterized in that** the clear opening extent of the fastening mounts (24.1, 45, 46) in the longitudinal direction of the frame profile (21, 22, 40) is at least double the opening extent transverse to the longitudinal direction.

3. Frame profile according to either of Claims 1 and 2, **characterized in that** the inner wall (25.1, 25.2) directed towards the interior of the switch cabinet is provided with in each case at least one further row of fastening mounts (24), and **in that** the rows of fastening mounts (24.1, 24) run parallel to one another.

4. Framework for a switch cabinet with vertical and horizontal frame profiles (40, 21, 22), it being the case that the frame profiles (40, 21, 22) have two inner walls which are located at right angles to one another, are directed towards the interior of the framework and are provided with at least one row of fastening mounts (24.1, 45, 46) introduced at equal spacing, the fastening mounts (24.1, 45, 46) being designed as slot-like through-passages of which the clear opening extent in the longitudinal direction of the frame profiles is greater than the clear opening extent transverse to the longitudinal direction, **characterized in that** connected at right angles in each case to the inner walls (41) of the vertical frame profiles (40) is a further profile side (42) designed as an inner wall, and **in that** the inner walls (41) and the profile sides (42) are provided with rows of fastening mounts (24.1, 45, 46).

5. Framework according to Claim 4, **characterized in that** the horizontal frame profiles (21, 22), which form a base frame and a top frame (10 and 20), are provided with two rows of fastening mounts (24, 24.1) on the inner wall (25.1) running perpendicularly to the side of the framework, at least that row of fastening mounts (24.1) which is directed towards the side of the framework forming the slot-like through-passages, and **in that** these rows of fastening mounts (24.1) merge into the rows of fastening mounts (45) of the vertical frame profiles (40).

## Revendications

1. Profilé de cadre pour un bâti d'encadrement d'une armoire de connexion, présentant deux parois intérieures disposées perpendiculairement l'une à l'autre et tournées vers l'espace intérieur de l'armoire de connexion, dotées d'au moins une série de découpes de fixation (24.1, 45, 46) ménagées à un même intervalle, les découpes de fixation (24.1, 45, 46) étant configurées comme percements en forme de fente dont la largeur d'ouverture dans le sens de la longueur du profilé d'encadrement (21, 22, 40) est supérieure à la largeur d'ouverture transversalement à la direction longitudinale, **caractérisé en ce que**:
un autre côté profilé (42) configuré comme paroi intérieure se raccorde perpendiculairement à chacune des parois intérieures (41), les parois intérieures (41) et les côtés profilés (42) étant dotés de séries de découpes de fixation (24.1, 45, 46).

2. Profilé de cadre selon la revendication 1, **caractérisé en ce que** la largeur d'ouverture des découpes de fixation (24.1, 45, 46) dans le sens de la longueur du profilé de cadre (21, 22, 40) est au moins le double de la largeur d'ouverture dans le sens transversal à la direction longitudinale.

3. Profilé de cadre selon la revendication 1 ou 2, **caractérisé en ce que** la paroi intérieure (25.1, 25.2) tournée vers l'espace intérieur de l'armoire de connexion est dotée chaque fois d'au moins une autre série de découpes de fixation (24), et **en ce que** les séries de découpes de fixation (24.1, 24) s'étendent parallèlement les unes aux autres.

4. Bâti d'encadrement pour une armoire de connexion, avec des profilés verticaux et horizontaux de cadre (40, 21, 22), les profilés de cadre (40, 21, 22) présentant deux parois intérieures disposées perpendiculairement l'une à l'autre et tournées vers l'espace intérieur de l'armoire de connexion, dotées d'au moins une série de découpes de fixation (24.1, 45, 46) ménagées à un même intervalle, les découpes de fixation (24.1, 45, 46) étant configurées comme percements en forme de fente dont la largeur d'ouverture dans le sens de la longueur du profilé d'encadrement est supérieure à la largeur d'ouverture transversalement à la direction longitudinale, **caractérisé en ce qu'**un autre côté profilé (42) configuré comme paroi intérieure est raccordé aux parois intérieures (41) des profilés verticaux de cadre (40), et **en ce que** les parois intérieures (41) et les côtés profilés (42) sont dotés de séries de découpes de fixation (24.1, 45, 46).

5. Bâti d'encadrement selon la revendication 4, **caractérisé en ce que** les profilés de cadre horizontaux (21, 22) qui forment un encadrement de fond et un encadrement de plafond (10 et 20) sont dotés de deux séries de découpes de fixation (24, 24.1) sur la paroi intérieure (25.1) qui s'étend verticalement sur le côté du bâti d'encadrement, au moins la série de découpes de fixation (24.1) tournée vers le côté du bâti d'encadrement formant des percements en forme de fentes, et **en ce que** ces séries de découpes de fixation (24.1) se transforment en les séries de découpes de fixation (45) des profilés verticaux de cadre (40).
